**Europäisches Patentamt**

**European Patent Office**

**Office européen des brevets**

(19)

(11) Veröffentlichungsnummer: **0 114 271**

**A1**

(12) # EUROPÄISCHE PATENTANMELDUNG

(21) Anmeldenummer: 83112227.0

(22) Anmeldetag: 06.12.83

(51) Int. Cl.³: **B 60 T 17/22**

(30) Priorität: 23.12.82 DE 3247865

(43) Veröffentlichungstag der Anmeldung:
01.08.84 Patentblatt 84/31

(84) Benannte Vertragsstaaten:
DE FR GB IT SE

(71) Anmelder: BAYERISCHE MOTOREN WERKE
Aktiengesellschaft
Postfach 40 02 40 Petuelring 130
D-8000 München 40(DE)

(72) Erfinder: Weishaupt, Walter, Ing. grad.
Im Wismat 28
D-8000 München 60(DE)

(74) Vertreter: Bullwein, Fritz
Bayerische Motoren Werke Aktiengesellschaft Postfach
40 02 40 Petuelring 130 AJ-33
D-8000 München 40(DE)

(54) Anzeigevorrichtung für einen Reibbelag in Kraftfahrzeugen.

(57) Bei einer Anzeigevorrichtung für einen Reibbelag (4,5) in Kraftfahrzeugen, der als Teil einer Kupplungs- oder Bremseinrichtungen unter Bewirkung einer aus einem Vorratsbehälter (8) stammenden Übertragungsflüssigkeit in seine Wirkstellung bringbar ist, ist das Niveau im Vorratsbehälter auf die Dicke des Reibbelags bezogen. Damit kann aus dem Niveau unmittelbar auf die Dicke des Reibbelags geschlossen werden.

EP 0 114 271 A1

Anzeigevorrichtung für einen Reibbelag in Kraftfahrzeugen Die Erfindung bezieht sich auf eine Anzeigevorrichtung für einen Reibbelag in Kraftfahrzeugen, der als Teil einer Kupplungs- oder Bremsvorrichtung unter der Wirkung einer aus einem Vorratsbehälter stammenden Übertragungsflüssigkeit in seine Wirkstellung bringbar ist.

Es sind derartige Anzeigevorrichtungen bekannt, bei denen im Vorratsbehälter ein Mindest-Niveaugeber angeordnet ist. Dieser zeigt an, daß der Vorratsbehälter aufzufüllen ist. Ein Bezug zur Dicke des Reibbelags bzw. der Reibbeläge besteht dabei nicht.

Der Erfindung liegt die Aufgabe zugrunde, eine Anzeigevorrichtung der eingangs genannten Art zu schaffen, bei der die Dicke des Reibbelags zu erkennen ist.

Die Erfindung löst diese Aufgabe dadurch, daß das Niveau im Vorratsbehälter auf die Dicke des Reibbelags bezogen ist.

Die Erfindung beruht auf dem Umstand, daß sich bei einer Dickenänderung des Reibbelags auch das Niveau im Vorratsbehälter ändert, da die Wirkfläche des Reibbelags im Ruhezustand in der Regel stets auf denselben geringen Abstand von der entsprechenden Gegenfläche nachgestellt wird und dabei eine Änderung des Arbeitsvolumens der Über-

tragungsflüssigkeit erfolgt. Durch den Bezug des Niveaus auf die Dicke des Reibbelags kann daher ohne zusätzliche Maßnahmen direkt diese Dicke bestimmt werden. Aufwendige Maßnahmen zur indirekten Verschleißmessung des Reibbelags, wie sie beispielsweise aus der DE-OS 31 15 450 und DE-PS 30 44 746 bekannt sind, können damit entfallen.

Die Anzeige des Niveaus der Übertragungsflüssigkeit im Vorratsbehälter kann auf unterschiedliche Weise erfolgen. Mit die einfachste Möglichkeit besteht darin, den Vorratsbehälter nach Art eines Meßröhrchens auszubilden und darauf beispielsweise direkt die dem jeweiligen Niveau entsprechende Dicke des Reibbelags zu markieren. Neben dieser direkten optischen Anzeige ist es auch möglich, den Vorratsbehälter mit einem Niveaugeber zu versehen, der entsprechend der Dicke des Reibbelags geeicht ist. Mit diesen beiden, nur beispielshaft angegebenen Realiserungsmöglichkeiten ist eine kontinuierliche Anzeige der Dicke des Reibbelags möglich.

In Erweiterung des Grundgedankens der Erfindung kann das Niveau im Vorratsbehälter auch auf die Dicke mehrerer Reibbeläge bezogen sein. Eine derartige Bezugnahme ist dann besonders einfach, wenn die Reibbeläge gleich sind. Jede Niveauänderung /setzt sich aus gleichen Anteilen zusammen, deren Zahl der der Reibbeläge gleich ist. Beispiele hierfür sind die beiden vorderen oder die beiden hinteren Bremsbeläge eines Kraftfahrzeugs. Derart gleiche Reibbeläge besitzen die Eigenschaft, daß ihr Verschleißverhalten zumindest nahezu identisch ist.

Aber auch dann, wenn die Reibbeläge unterschiedlich sind, läßt sich eine wirksame Anzeige der Dicken der Reibbeläge gewinnen. Beispiele hierfür sind ein vorderer und ein hinterer Bremsbelag, die bei Zweikreis-Bremsanlagen aus einem gemeinsamen Vorratsbehälter mit Übertragungsflüssigkeit versorgt werden. Bei derartigen Reibbelägen stehen die jeweiligen Dickenänderungen im Mittel in einem bestimmten Verhältnis. Somit setzt sich jede Niveauänderung im Vorratsbehälter aus zwei in der Regel unterschiedlichen Anteilen zusammen, die durch die jeweiligen Reibbeläge bestimmt sind. Diese Anteile stehen aber aufgrund der Änderungsrelation der Reibbeläge in einem bestimmbaren Verhältnis zueinander, so daß auch hier aus dem Niveau im Vorratsbehälter auf die Dicken der beiden Reibbeläge geschlossen werden kann.

Bei derart unterschiedlich beanspruchten Reibbelägen läßt sich eine erhebliche Vereinfachung der Anzeige bzw. deren Auswertung erzielen, wenn die Reibbeläge in ihrem Verschleißverhalten gleich sind. Ohne Berücksichtigung möglicher Unterschiede in der Betätigungsklimatik für die Reibbeläge stammt jede Niveauänderung im Vorratsbehälter zu gleichen Teilen von den beiden Reibbelägen. Eine derartige Angleichung des Verschleißverhaltens kann auf unterschiedliche Weise erreicht werden. Zum einen können die Reibbeläge durch geeignete Materialwahl bei gleicher nutzbarer Gesamtdicke auf einen synchronen Verschleiß eingestellt werden. Zum anderen können bei unterschiedlichem differenziellem Verschleiß die nutzbaren Dicken unterschiedlich und entsprechend dem Verhältnis des differenziellen Verschleißes gewählt werden.

Schließlich soll auf ein weiteres Problem eingegangen werden. Derartige Übertragungsflüssigkeiten sind in der Regel schwer-flüchtig. Um dennoch einen möglichen Verdampfungsverlust und damit eine Verfälschung der Anzeige zu kompensieren, kann der Vorratsbehälter und eine Kondensationseinrichtung mit der Atmosphäre verbunden sein.

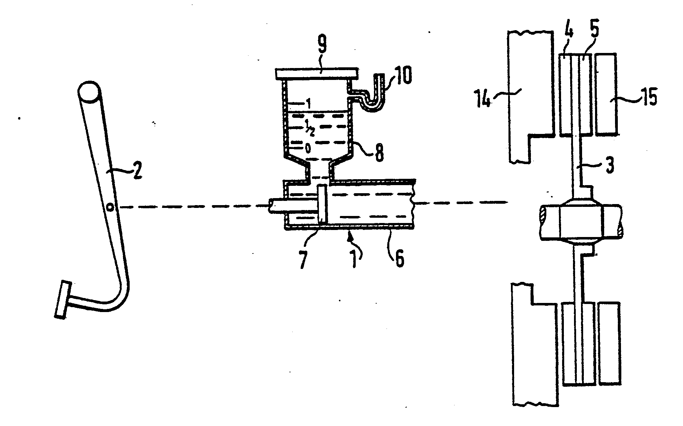

In der Zeichnung ist ein Ausführungsbeispiel der Erfindung dargestellt.

Eine nicht im einzelnen gezeigte, allgemein bekannte Kupplungsvorrichtung für ein Kraftfahrzeug enthält ein hydraulisches System 1, bei dem die Bewegung eines Kupplungspedals 2 und nachgeschaltete mechanische Übertragungselemente auf eine Kupplungsscheibe 3 übertragen wird. Die Kupplungsscheibe 3 besitzt beidseitig Reibbeläge 4 und 5, die in der Wirklage an einer Druckplatte 14 bzw. einem Schwungrad 15 - beides nicht dargestellt - anliegen.

Das System 1 enthält einen Hauptzylinder 6, in dem ein Kolben 7 durch das Kupplungspedal 2 verschiebbar ist. Der Kolben 7 preßt Übertragungsflüssigkeit aus dem Hauptzylinder 6. Dieser ist mit einem Vorratsbehälter 8 verbunden, der ebenfalls mit Übertragungsflüssigkeit gefüllt ist. Entsprechend dem Verschleiß verringert sich die Dicke der Reibbeläge 4 und 5. Dies erfordert in der Wirklage ein Nachführen der Druckplatte. Jede Veränderung wird dadurch ausgeglichen, daß mehr Übertragungsflüssigkeit aus dem Vorratsbehälter 8 dem System 1 zugeführt wird. Dadurch sinkt das Niveau der Übertragungsflüssigkeit im Vorratsbehälter 8.

Entsprechend der Erfindung ist dieses Niveau auf die - sich in der Regel gleichmäßig ändernde - Dicke der Reibbeläge 4 und 5 bezogen. Im einfachsten Fall besitzt der aus transparentem Material bestehende Vorratsbehälter 8 an seiner Außenseite eine Markierung der Niveaus, die bei Abnutzen der Reibbeläge von ihrer Ausgangsdicke bis zu ihrer vollständigen möglichen Abnutzung vorliegen. Anhand der Markierung ist ohne weiteres feststellbar, wie groß der Verschleißgrad der Kupplungsbeläge 4 und 5 ist.

Anstelle der Markierungen am Vorratsbehälter 8 kann auch ein Niveaugeber in diesen Behälter eingebaut sein, dessen Ausgangssignal nach entsprechender Eichung ebenfalls unmittelbar die noch zur Verfügung stehende bzw. verbrauchte Dicke des bzw. der Reibbeläge erkennen läßt.

0114271

Der mit einem Deckel 9 luftdicht verschließbare Vorratsbehälter 8 steht über eine nach Art eines Geruchsverschluß ausgebildete Kondensationseinrichtung 10 mit der Atmosphäre in Verbindung. Die im Vorratsbehälter möglicherweise verdampfende Übertragungsflüssigkeit schlägt sich darin nieder, bis der U-Rohr-förmige Abschnitt der Kondensationseinrichtung 10 aufgefüllt ist. Danach verdampfende Übertragungsflüssigkeit 8 fließt aus der Kondensationseinrichtung 10 in den Vorratsbehälter 8 zurück. Aufgrund der kleinen mit der Atmosphäre in Verbindung stehenden Oberfläche der Kondensationseinrichtung 10 kann die dort möglicherweise noch verdampfende Menge an Übertragungsflüssigkeit auf ein nicht in Erscheinung tretendes Maß reduziert werden. Durch die Ausbildung der Kondensationseinrichtung 10 in der dargestellten Weise ist auch ein automatisches Nachlaufen der darin enthaltenen Übertragungsflüssigkeit in den Vorratsbehälter 8 sichergestellt. Sinkt das Niveau im Vorratsbehälter 8 aufgrund der beschriebenen Verringerung der Reibbelagdicken ab, so wird die in der Kondensationseinrichtung 10 enthaltene Übertragungsflüssigkeit wieder zurück in den Vorratsbehälter 8 gesaugt.

In entsprechender Weise kann mit Hilfe eines an geeigneter Stelle angeordneten Temperatursensors oder durch in unterschiedlicher Höhe am Vorratsbehälter 8 angebrachten Markierungen die von der Temperatur der Übertragungsflüssigkeit abhängige Änderung des Niveaus berücksichtigt und dieser Temperatureinfluß kompensiert werden.

Patentansprüche:

1. Anzeigevorrichtung für einen Reibbelag in Kraftfahrzeugen, der als Teil einer Kupplungs- oder Bremsvorrichtung unter der Wirkung einer aus einem Vorratsbehälter (8) stammenden Übertragungsflüssigkeit in seine
Wirkstellung bringbar ist, dadurch gekennzeichnet, daß
das Niveau im Vorratsbehälter (8) auf die Dicke des
Reibbelags (4, 5) bezogen ist.

2. Vorrichtung nach Anspruch 1, dadurch gekennzeichnet,
daß der Vorratsbehälter einen Niveaugeber enthält, der
entsprechend der Dicke des Reibbelags geeicht ist.

3. Vorrichtung nach Anspruch 1 oder 2, dadurch gekennzeichnet, daß die Dicke des Reibbelags kontinuierlich
angezeigt ist.

4. Vorrichtung nach einem der Ansprüche 1 bis 3, dadurch
gekennzeichnet, daß das Niveau auf mehrere Reibbeläge
(4, 5) bezogen ist.

5. Vorrichtung nach Anspruch 4, dadurch gekennzeichnet,
daß die Reibbeläge (4, 5) gleich sind.

6. Vorrichtung nach Anspruch 4 oder 5, dadurch gekennzeichnet, daß die Reibbeläge in ihrem Verschleißverhalten gleich sind.

7. Vorrichtung nach einem der Ansprüche 1 bis 6, dadurch gekennzeichnet, daß der Vorratsbehälter (8) über eine Kondensationseinrichtung (10) mit der Atmosphäre verbunden ist.

# EUROPÄISCHER RECHERCHENBERICHT

**0114271**
Nummer der Anmeldung

EP 83 11 2227

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 630 738 (TEVES)<br>* Ansprüche 1-3; Seite 4, Zeilen 18-27; Figuren 1-3 * | 1,2 | B 60 T 17/22 |
| A | DE-A-2 405 846 (TEVES)<br>* Seite 2, Zeilen 14-16; Seite 3, Zeilen 21-26; Figur * | 1-3 | |
| A | US-A-3 697 942 (HOCKING et al.) | | |

RECHERCHIERTE
SACHGEBIETE (Int. Cl. ³)

B 60 T 17/00

Der vorliegende Recherchenbericht wurde für alle Patentansprüche erstellt.

| Recherchenort | Abschlußdatum der Recherche | Prüfer |
|---|---|---|
| BERLIN | 13-03-1984 | LUDWIG H J |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

Europäisches Patentamt